(19) Europäisches Patentamt
European Patent Office
Office européen des brevets

(11) Veröffentlichungsnummer: **0 316 680 B1**

# (12) EUROPÄISCHE PATENTSCHRIFT

(45) Veröffentlichungstag der Patentschrift: **22.07.92**

(51) Int. Cl.$^5$: **C09C 1/00**

(21) Anmeldenummer: **88118373.5**

(22) Anmeldetag: **04.11.88**

## (54) Verwendung von aus Metalloxiden oder aus Metall- und Nichtmetalloxiden bestehenden Verbindungen als anorganische Farbkörper.

(30) Priorität: **19.11.87 DE 3739168**

(43) Veröffentlichungstag der Anmeldung:
**24.05.89 Patentblatt 89/21**

(45) Bekanntmachung des Hinweises auf die Patenterteilung:
**22.07.92 Patentblatt 92/30**

(84) Benannte Vertragsstaaten:
**AT BE CH DE ES FR GB IT LI NL SE**

(56) Entgegenhaltungen:

**PATENT ABSTRACTS OF JAPAN, JAPANESE PATENT OFFICE, Tokyo, JP; & JP-A-60 011 227 (KAGAKUGI JUTSUCHO MUKI ZAISHITSU KENKYUSHO)**

**PATENT ABSTRACTS OF JAPAN, JAPANESE PATENT OFFICE, Tokyo, JP; & JP-A-62 235 298 (NATL. INST. FOR RES. IN INORG. MATER.)**

**WORLD PATENT INDEX, LATEST, Nr. 81-86319D [47], Derwent Publications Ltd, Londen, GB; & JP-A-56 129 700 (KAGAKU GIJUTSU-CHO KINZ)**

(73) Patentinhaber: **Degussa Aktiengesellschaft**
**Weissfrauenstrasse 9**
**W-6000 Frankturt am Main 1(DE)**

(72) Erfinder: **Speer, Dietrich, Dr.**
**Theodor-Heuss-Strasse 61**
**W-6450 Hanau 9(DE)**
Erfinder: **Jansen, Martin, Prof. Dr.**
**Zur Marterkapelle 93**
**W-5300 Bonn(DE)**
Erfinder: **Fischer, Robert, Dr. Degussa S.A.**
**Div. Ouimica Rua St. Antonio, 184**
**Caixa Postal BR-01314 Sao Paulo-SP(BR)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Verwendung von aus Metalloxiden oder aus Metall- und Nichtmetalloxiden bestehenden Verbindungen als anorganische Farbkörper

Die Erfindung betrifft die Verwendung von aus Metalloxiden oder aus Metalloxiden und Nichtmetalloxiden bestehenden, synthetisch hergestellten Verbindungen als anorganische Farbkörper.

Zur Einfärbung verschiedener Werkstoffe, wie Keramik oder Kunststoffe, verwendet man anorganische Farbkörper, bestehend aus Metalloxiden oder Metall- und Nichtmetalloxiden. Diese enthalten meist toxisch bedenkliche Schwermetalloxide in erheblichen Konzentrationen. Beispiele hierfür sind die bekannten Farbkörper $Ca_3\ Cr_2\ (SiO_4)_3$ mit 30 % Chromoxid, $Ni_2\ SiO_4$ bzw. $Co_2\ SiO_4$ mit jeweils 71 % NiO bzw. CoO, $CoAl_2O_4$ mit 42 % CoO, $NiFe_2O_4$ mit 32 % NiO oder Co $Cr_2O_4$ mit 33 % CoO und 67 % $Cr_2O_3$ als toxische Bestandteile. Besonders die als anorganische Farbkörper weiterverbreiteten Spinelle enthalten hohe Konzentrationen an toxisch nicht unbedenklichen Bestandteilen.

In der DE-OS 19 33 338 wird ein gelber Farbkörper der ungefähren Zusammensetzung $Ba_{1,33}\ (Ti\ Ni_8)$-$O_{16}$ beschrieben, der eine verzerrte Prideritestruktur aufweist. Auch dieser Farbkörper enthält große Anteile toxischer Metalle.

Es war daher Aufgabe der vorliegenden Erfindung, anorganische Farbkörper aus Metalloxiden oder Metall- und Nichtmetalloxiden zu finden, die zur Farbgebung nur geringe Mengen an toxisch bedenklichen Schwermetalloxiden benötigen.

Diese Aufgabe wurde erfindungsgemäß gelöst durch die Verwendung von synthetisch hergestellten Verbindungen mit einer Hollanditstruktur folgender Zusammensetzungen:

$$A^{+}_{2x+y}\ (B^{2+}_{x}\ C^{3+}_{y}\ D^{4+}_{8-x-y})\ O_{16}$$

$$A^{+}_{2x}\ (B^{2+}_{x+z/2}\ D^{4+}_{8-x-z}\ E^{6+}_{z/2})\ O_{16}$$

$$A^{+}_{y}\ (C^{3+}_{y+2z/3}\ D^{4+}_{8-y-z}\ E^{6+}_{z/3})\ O_{16}$$

$$A^{2+}_{u+v/2}\ (B^{2+}_{u}\ C^{3+}_{v}\ D^{4+}_{8-u-v})\ O_{16}$$

$$A^{2+}_{u}\ (B^{2+}_{u+w/2}\ D^{4+}_{8-u-w}\ E^{6+}_{w/2})\ O_{16}$$

$$A^{2+}_{v/2}\ (C^{3+}_{v+\frac{2w}{3}}\ D^{4+}_{8-v-w}\ E^{6+}_{w/3})\ O_{16}$$

mit A = Kalium, Rubidium und/oder Caesium
$A^{2+}$ = Strontium
$B^{2+}$ = Nickel, Mangan, Magnesium, Kobalt und/oder Eisen
$C^{3+}$ = Aluminium, Chrom, Eisen, Kobalt und/oder Titan
$D^{4+}$ = Titan, Silizium und/oder Zinn
$E^{6+}$ = Wolfram und/oder Molybdän
x = 0 bis 1, y = 0 bis 2, z = 0 bis 2
u = 0 bis 2, v = 0 bis 3, w = 0 bis 1
als anorganische Farbkörper.

Besonders geeignete keramische Farbkörper erhält man, wenn als
$A^{+}$ = Kalium
$B_{2+}$ = Nickel, Mangan und/oder Magnesium
$C^{3+}$ = Aluminium und/oder Chrom
$D^{4+}$ = Titan
$E^{6+}$ = Wolfram und/oder Molybdän

ausgewählt werden.

Hollandite kommen als Manganmineralien in der Natur vor und besitzen näherungsweise die Zusammensetzung $Ba_2\ Mn_8\ O_{16}$. Diese natürlich vorkommenden Hollandite sind allerdings als anorganische Farbkörper wenig geeignet. Ihre chemischen und physikalischen Eigenschaften werden z. B. in Chemical Abstracts 105 (1986) 103458w und 96 (1982) 55489d untersucht.

Die Hollanditkristallstruktur besteht aus einem Netzwerk aus ecken- und kantenverknüpften (BCDE)06-Oktaedern. In den Kanälen dieses Gerüstes sind die das Netzwerk stabilisierenden großen A-Kationen lokalisiert. Die Hollandite kristallisieren in der tetragonalen Raumgruppe I 4/m. In Abhängigkeit von der Zusammensetzung wird das tetragonale Netzwerk monoklin verzerrt (Raumgruppe I 2/m).

Die erfindungsgemäßen Farbkörper enthalten als Farbträger nur relativ geringe Anteile an toxisch bedenklichen Schwermetalloxiden und zeigen überraschenderweise dennoch Farbeindrücke mit großer Farbinensität. Sie dienen vorzugsweise zur Einfärbung von Kunststoffen.

Die anorganischen Farbkörper mit Hollanditstruktur werden hergestellt durch Vermischen der pulverförmigen Metall-bzw. Nichtmetalloxide in der erforderlichen stöchiometrischen Zusammensetzung und mehrstündigem Erhitzen auf Temperaturen oberhalb 900° C.

Folgende Beispiele zeigen einige besonders vorteilhafte anorganische Farbkörper in Hollanditstruktur:

1. Ein Gemisch aus 13,8 g $K_2CO_3$, 52 g $TiO_2$, 5,1 g $Al_2O_3$ und 5,8 g $NiCO_3\ 2Ni(OH)_2 \cdot 4H_2O$ wird nach einer Naßmahlung unter Wasser und Trocknung 24 Stunden in Schamott-Tiegeln bei 1000° C geglüht. Das aufgemahlene Produkt zeigt eine intensiv grünlichgelbe Farbe und besitzt die Zusammensetzung $K_2(Ni_{0,5}\ Al_{1,0}\ Ti_{6,5})O_{16}$. Es enthält lediglich 5,3 % NiO.

2. Analog Beispiel 1 verwendet man ein Gemisch, das anstelle der Nickelverbindung 3,0 g $Cr_2O_3$ enthält. Das grünolive Produkt besitzt die Zusammensetzung $K_2\ (Cr_{0,4}\ Al_{1,6}\ Ti_6)O_{16}$ mit 4,4 % $Cr_2O_3$

3. Analog Beispiel 1 verwendet man ein Gemisch, das anstelle der Nickelverbindung 2,3 g Mangancarbonat enthält. Das rötlichbraune Produkt besitzt die Zusammensetzung $K_2\ (Mn_{0,2}\ Al_{1,6}\ Ti_{6,2})O_{16}$ mit 2,1 % MnO.

Auf die gleiche Weise kann man beispielsweise folgende Verbindungen herstellen:

$K_2\ (Cr_{0,8}Al_{1,2}Ti_6)O_{16}$
$K_2\ (Cr_{1,2}Al_{0,8}Ti_6)O_{16}$
$Rb_2\ (Mn_{0,6}Al_{0,8}Ti_{6,6})O_{16}$
$Rb_2\ (Mn_{1,0}Ti_7)O_{16}$
$K_2\ (Mg_{0,3}Ni_{0,7}Ti_7)O_{16}$
$K_2\ (Mg_{0,7}Ni_{0,3}Ti_7)O_{16}$

4. Analog Beispiel 1 verwendet man ein Gemisch aus 12,5 g $H_2WO_4$, 11,22 g NiO, 47,92 g $TiO_2$ und 13,8 g $K_2CO_3$, das bei 1300°C 2 Stunden kalziniert wird. Das enthaltene Pigment der Zusammensetzung $K_2(Ni_{1,5}Ti_6w_{0,5})O_{16}$ weist gegenüber dem Pigment von Beispiel 1 einen deutlich geringeren Grünstich auf.

5. Analog Beispiel 1 verwendet man ein Gemisch aus 7,2 g $MoO_3$, 7,48 g NiO, 47,92 g $TiO_2$, 13,8 g $K_2CO_3$ und 10,72 g $Mg(CH_3COO)_2 \cdot 4H_2O$, das bei 1300°C 2 Stunden kalziniert wird.

Das erhaltene Pigment der Zusammensetzung $K_2(Ni_{1,0}\ Mg_{0,5}Ti_6MO_{0,5})O_{16}$ weist gegenüber den Pigmenten von Beispiel 1 und 4 keinen Grünstich mehr auf.

**Patentansprüche**

1. Verwendung von aus Metalloxiden oder aus Metall- und Nichtmetalloxiden bestehenden, synthetisch hergestellten Verbindungen mit einer Hollanditstruktur folgender Zusammensetzung:

$$A^{+}_{2x+y} \quad (B^{2+}_{x}\ C^{3+}_{y}\ D^{4+}_{8-x-y})\ O_{16}$$

$$A^{+}_{2x} \quad (B^{2+}_{x+z/2}\ D^{4+}_{8-x-z}\ E^{6+}_{z/2})\ O_{16}$$

$$A^{+}_{y} \quad (C^{3+}_{y+2z/3}\ D^{4+}_{8-y-z}\ E^{6+}_{z/3})\ O_{16}$$

$$A^{2+}_{u+v/2} \quad (B^{2+}_{u}\ C^{3+}_{v}\ D^{4+}_{8-u-v})\ O_{16}$$

$$A^{2+}_{u} \quad (B^{2+}_{u+w/2}\ D^{4+}_{8-u-w}\ E^{6+}_{w/2})\ O_{16}$$

$$A^{2+}_{v/2} \quad (C^{3+}_{v+2w/3}\ D^{4+}_{8-v-w}\ E^{6+}_{w/3})\ O_{16}$$

mit A = Kalium, Rubidium und/oder Caesium
$A^{2+}$ = Strontium
$B^{2+}$ = Nickel, Mangan, Magnesium, Kobalt und/oder Eisen
$C^{3+}$ = Aluminium, Chrom, Eisen, Kobalt und/oder Titan
$D^{4+}$ = Titan, Silizium und/oder Zinn
$E^{6+}$ = Wolfram und/oder Molybdän
x = 0 bis 1, y = 0 bis 2, z = 0 bis 2
u = 0 bis 2
v = 0 bis 3, w = 0 bis 1
als anorganische Farbkörper.

**2.** Verwendung von Verbindungen gemäß Anspruch 1 mit folgenden Komponenten:
$A^{+}$ = Kalium
$B^{2+}$ = Nickel, Mangan und/oder Magnesium
$C^{3+}$ = Aluminium und/oder Chrom
$D^{4+}$ = Titan
$E^{6}$ = Wolfram und/oder Molybdän.

## Claims

**1.** Use of synthetically prepared compounds consisting of metal oxides or metal and non-metal oxides and having a hollandite structure of the following composition:

$$A^{+}_{2x+y} \quad (B^{2+}_{x} \; C^{3+}_{y} \; D^{4+}_{8-x-y}) \; O_{16}$$

$$A^{+}_{2x} \quad (B^{2+}_{x+z/2} \; D^{4+}_{8-x-z} \; E^{6+}_{z/2}) \; O_{16}$$

$$A^{+}_{y} \quad (C^{3+}_{y+2z/3} \; D^{4+}_{8-y-z} \; E^{6+}_{z/3}) \; O_{16}$$

$$A^{2+}_{u+v/2} \quad (B^{2+}_{u} \; C^{3+}_{v} \; D^{4+}_{8-u-v}) \; O_{16}$$

$$A^{2+}_{u} \quad (B^{2+}_{u+w/2} \; D^{4+}_{8-u-w} \; E^{6+}_{w/2}) \; O_{16}$$

$$A^{2+}_{v/2} \quad (C^{3+}_{v+2w/3} \; D^{4+}_{8-v-w} \; E^{6+}_{w/3}) \; O_{16}$$

where A is potassium, rubidium and/or caesium
$A^{2+}$ is strontium
$B^{2+}$ is nickel, manganese, magnesium, cobalt
and/or iron $C_{3+}$ is aluminium, chromium, iron, cobalt
and/or titanium $D^{4+}$ is titanium, silicon and/or tin
$E^{6+}$ is tungsten and/or molybdenum
x is 0 to 1, y is 0 to 2, z is 0 to 2
u is 0 to 2
v is 0 to 3, w is 0 to 1
as inorganic pigment.

**2.** Use of compounds according to Claim 1 having the following components:
$A^{+}$ is potassium
$B^{2+}$ is nickel, manganese and/or magnesium
$C^{3+}$ is aluminium and/or chromium
$D^{4+}$ is titanium
$E^{6+}$ is tungsten and/or molybdenum.

## Revendications

**1.** Utilisation de composés préparés par voie de synthèse à partir d'oxydes métalliques ou d'oxydes métalliques ou d'oxydes métalliques et non-métalliques ayant une structure d'hollandite de composition suivante :

$$A^{+}_{2x+y} \quad (B^{2+}_{x} \; C^{3+}_{y} \; D^{4+}_{8-x-y}) \; O_{16}$$

$$A^{+}_{2x} \quad (B^{2+}_{x+z/2} \; D^{4+}_{8-x-z} \; E^{6+}_{z/2}) \; O_{16}$$

$$A^{+}_{y} \quad (C^{3+}_{y+2z/3} \; D^{4+}_{8-y-z} \; E^{6+}_{z/3}) \; O_{16}$$

$$A^{2+}_{u+v/2} \quad (B^{2+}_{u} \; C^{3+}_{v} \; D^{4+}_{8-u-v}) \; O_{16}$$

$$A^{2+}_{u} \quad (B^{2+}_{u+w/2} \; D^{4+}_{8-u-w} \; E^{6+}_{w/2}) \; O_{16}$$

$$A^{2+}_{v/2} \quad (C^{3+}_{v+2w/3} \; D^{4+}_{8-v-w} \; E^{6+}_{w/3}) \; O_{16}$$

dans laquelle
A = potassium, rubidium et/ou césium
$A^{2+}$ = strontium
$B^{2+}$ = nickel, manganèse, magnésium, cobalt et/ou fer
$C^{3+}$ = aluminium, chrome, fer, cobalt et/ou titane
$D^{4+}$ = titane, silicium et/ou étain
$E^{6+}$ = tungstène et/ou molybdène
x = 0 à 1, y = 0 à 2, z = 0 à 2
u = 0 à 2
v = 0 à 3, w = 0 à 1,
en tant que corps colorant.

**2.** Utilisation de composés selon la revendication 1, comportant les composants suivants :
$A^{+}$ = potassium
$B^{2+}$ = nickel, manganèse et/ou magnésium
$C^{3+}$ = aluminium et/ou chrome
$D^{4+}$ = titane
$E^{6}$ = tungstène et/ou molybdène.